# EUROPÄISCHE PATENTSCHRIFT

(11) **EP 1 740 401 B1**
(45) Veröffentlichungstag und Bekanntmachung des Hinweises auf die Patenterteilung: **19.08.2009**
(21) Anmeldenummer: 05738240.0
(22) Anmeldetag: 18.04.2005
(51) Int. Cl.: B60H 1/32

(54) **VERFAHREN UND VORRICHTUNG ZUR REGELUNG EINES KÄLTEMITTELKREISLAUFS EINER KLIMAANLAGE FÜR EIN FAHRZEUG**
METHOD AND DEVICE FOR REGULATING A COOLANT CIRCUIT OF A VEHICLE AIR CONDITIONING SYSTEM
PROCEDE ET DISPOSITIF POUR REGULER LE FONCTIONNEMENT DU CIRCUIT D'AGENT DE REFROIDISSEMENT DU SYSTEME DE CLIMATISATION D'UN VEHICULE

(30) Priorität: 19.04.2004 DE 102004019438
(43) Veröffentlichungstag der Anmeldung: 10.01.2007
(73) Patentinhaber: Behr GmbH & Co. KG, 70469 Stuttgart (DE)
(72) Erfinder: BARUSCHKE, Wilhelm, 73117 Wangen (DE); BRITSCH-LAUDWEIN, Armin, 71272 Renningen (DE); LOCHMAHR, Karl, 71665 Vaihingen/Enz (DE)
(86) Internationale Anmeldenummer: PCT/EP2005/004071
(87) Internationale Veröffentlichungsnummer: WO 2005/100061

(56) Entgegenhaltungen:
- EP-A- 1 348 584
- US-A1- 2002 026 801
- US-B1- 6 637 229

## Beschreibung

Die Erfindung betrifft ein Verfahren und eine Vorrichtung zur Regelung eines Kältemittelkreislaufs, z. B. eines so genannten R134a- oder R744-Kältemittelkreislaufs, einer Klimaanlage für ein Fahrzeug.

Zur Verbesserung der Innenraumbehaglichkeit und des thermischen Komforts in einem Fahrzeug wird im Allgemeinen ein Klimatisierungssystem (auch Klimaanlage genannt) verwendet, das zumindest aus einem Heiz- und Kältemittelkreislauf, einem Klimagerät und einer Luftführung gebildet ist. Im Heiz- und Kältemittelkreislauf, z. B. einem so genannten R744-Kältemittelkreislauf (CO2), ist unter ungünstigen Bedingungen, insbesondere bei niedrigen Drehzahlen des Fahrzeugmotors die Förderleistung des Klima- oder Kältemittelkompressors weitgehend gering, so dass bei hohen Außentemperaturen und starker Sonneneinstrahlung und beispielsweise zusätzlich bei einem Ampelstopp, einem Stau oder einer ähnlichen Situation eine komfortable Innenraumklimatisierung nicht mehr ermöglicht ist. Darüber hinaus wird das Kälteleistungsvermögen aufgrund unzureichender Kondensator- oder Gaskühlerbelüftung mangels Fahrtwind weiter beeinträchtigt.

Zur Vermeidung derartiger unzureichender Innenraumklimatisierung ist es bekannt, Verdichter mit einem eigenen Elektromotor auszustatten, der unabhängig von der Drehzahl des Fahrzeugmotors geregelt werden kann. Derartige Konzepte finden insbesondere in Fahrzeugen mit alternativer Antriebstechnologie, z. B. Elektro-, Hybrid- oder Brennstoffzellenfahrzeugen, die keinen antriebsmotorfesten Klimakompressor aufweisen, Anwendung. Auch für herkömmliche Verbrennungsmotoren ist dieses Konzept anwendbar, sofern das Bordnetz die dafür erforderliche elektrische Leistung bereitstellen kann. Nachteilig dabei ist, dass dieses Konzept in einem Fahrzeug mit einem Verbrennungsmotor sehr aufwendig ist oder nur für spezielle Fahrzeug anwendbar ist.

Dokument EP-A-13 48 584 offenbart ein Verfahren und eine Vorrichtung zur Regelung eines Kältemittelkreislaufs gemäß das erste Teil der Ansprüche 1 and 9.

Die Aufgabe der Erfindung ist es daher, ein Verfahren und eine Vorrichtung zur Regelung eines Kältemittelkreislaufs anzugeben, welches eine möglichst gute Innenraumklimatisierung auch im Stillstand ermöglicht.

Erfindungsgemäß wird die Aufgabe gelöst durch ein Verfahren mit den Merkmalen des Anspruchs 1 und durch eine Vorrichtung mit den Merkmalen des Anspruchs 9. Vorteilhafte Weiterbildungen sind Gegenstand der Unteransprüche.

Beim Verfahren zur Regelung eines Kältemittelkreislaufs einer Klimaanlage für ein Fahrzeug wird in einem Basisregelkreis (auch übergeordnete Regelung genannt) ein Sollwert für eine Verdampfertemperatur vorgegeben, der einem Verdampfertemperatur-Regler zur Bildung einer Stellgröße zur Regelung der Verdampfertemperatur zugeführt wird.

Die Stellgröße zur Regelung der Verdampfertemperatur wird zusätzlich zur Steuerung des Kondensator bzw. Gaskühlerlüfters verwendet.

Dadurch wird im Stillstand des Fahrzeugs oder im so genannten Idle-Stopp-Betrieb eine verbesserte Innenraumklimatisierung erreicht. Der Komfortgewinn wird rein verfahrenstechnisch erzielt (Software-Modul), ohne Zusatzkosten, Gewicht und Bauraum.

Die Stellgröße wird zur Regelung der Verdampfertemperatur in einem ersten Bereich von 0 % bis 80 % zur Steuerung des Kompressors verwendet. In einem zweiten Bereich von größer 70 % der Stellgröße und somit einer Überschneidung von beispielsweise 10 % wird diese der Lüftersteuerung zugeführt. Mit anderen Worten: Im unteren, ersten Stellgrößenbereich wird die Stellgröße zur Regelung der Verdampfertemperatur zur Steuerung des Kompressors verwendet. Wird dabei trotz Vollaussteuerung des Kompressors die vorgegebene Verdampfertemperatur nicht erreicht, so steigt die Stellgröße automatisch weiter in den oberen zweiten Bereich an, der dann auf die Lüftersteuerung einwirkt. Auf diese Art und Weise wird bei ungünstigen Randbedingungen zumindest der Abstand zur gewünschten Verdampfertemperatur verringert.

In weiteren bevorzugten Ausführungsformen des Verfahrens kann der erste Bereich der Stellgröße zur Regelung der Verdampfertemperatur auch kleinere Werte, beispielsweise von 0 % bis 60 %, 65 %, 70 % oder 75 % oder auch etwas größere Werte wie beispielsweise von 0 % bis 85 % oder 90 % annehmen. Angepasst an diesen ersten Bereich kann der zweite Bereich der Stellgröße bei Werten von größer 60 %, beispielsweise 65 %, 70 %, 75 %, 80 % oder 85 % beginnen und bei 100% enden. Für den Überlappungsbereich dieser Bereiche erweisen sich Werte von größer 0 %, beispielsweise 5 %, 10 %, 15 %, 20 %, 25 % oder 30% als vorteilhaft.

Alternativ kann der Lüftersteuerung die Regelabweichung zwischen Sollwert für die Verdampfertemperatur und Istwert für die Verdampfertemperatur zugeführt werden. D.h. die Lüftersteuerung kann auch in Abhängigkeit von der Regelabweichung erfolgen. Des Weiteren kann der Lüftersteuerung der momentane Wert der Fahrgeschwindigkeit zugeführt werden. Dabei wird der momentane Wert der Fahrgeschwindigkeit als Störgröße aufgeschaltet. Hierdurch werden frühzeitig auch jene Fahrzustände berücksichtigt, welche zu einer ungünstigen Innenraumklimatisierung führen.

Durch eine Lüfter-Vorsteuerung über die Fahrgeschwindigkeit wird die Spontanität des Regelungsverfahrens erhöht, wodurch eine weitere Komfortsteigerung ermöglicht wird.
Die beschriebene Ausführungsform nimmt Bezug auf eine stufenlose Kompressor und Lüfteransteuerung. In weiteren Ausführungsformen können sowohl Lüfter- als auch Kompressoransteuerung gestuft als auch einstufig ausgeführt sein.

Zusätzlich zur Lüftersteuerung über die Stellgröße des Verdampfertemperatur-Reglers ist eine konventionelle Kältemittel-Hochdruck-Überwachung mittels Lüftersteuerung implementiert.

Bei die Ausführungsform einer Vorrichtung zur Regelung eines Kältemittelkreislaufs einer Klimaanlage umfasst diese einen Basisregelkreis zur Ermittlung eines Sollwerts für die Verdampfertemperatur und einen nachgeschalteten Verdampfertemperatur-Regler, dessen Stellgröße sowohl die Kompressor als auch die Lüftersteuerung führt. Vorzugsweise ist dabei die Lüftersteuerung als eine Kennlinien-Funktion der Stellgröße ausgebildet, wobei in einem ersten Bereich von 0 % bis 80 % die Stellgröße auf eine Kompressorsteuerung einwirkt und in einem zweiten Bereich von größer 70 % der Stellgröße diese auf die Lüftersteuerung einwirkt.

In weiteren bevorzugten Ausführungsformen der Vorrichtung kann der erste Bereich der Stellgröße zur Regelung der Verdampfertemperatur auch kleinere Werte, beispielsweise von 0 % bis 60 %, 65 %, 70 % oder 75 % oder auch etwas größere Werte wie beispielsweise von 0 % bis 85 % oder 90 % annehmen. Angepasst an diesen ersten Bereich kann der zweite Bereich der Stellgröße bei Werten von größer 60 %, beispielsweise 65 %, 70 %, 75 %, 80 % oder 85 % beginnen und bei 100% enden. Für den Überlappungsbereich dieser Bereiche erweisen sich Werte von größer 0 %, beispielsweise 5 %, 10 %, 15 %, 20 %, 25 % oder 30% als vorteilhaft.

Zur Berücksichtigung weiterer oder alternativer Eingangssignale ist die Lüftersteuerung entsprechend ausgelegt. Beispielsweise ist einer der Eingänge zur Steuerung des Lüfters in Abhängigkeit von der Regelabweichung zwischen Sollwert für die Verdampfertemperatur und Istwert für die Verdampfertemperatur vorgesehen. Ein anderer Eingang ist beispielsweise zur Steuerung des Lüfters in Abhängigkeit vom momentanen Wert der Fahrgeschwindigkeit vorgesehen.

Die mit der Erfindung erzielten Vorteile bestehen insbesondere darin, dass ohne zusätzliche Bauteile, wie Elektromotor (für E-Kompressor), durch eine modifizierte Lüftersteuerung für den Kondensator bzw. den Gaskühler eine Steigerung der Kälteleistung und somit eine verbesserte Innenraumklimatisierung auch bei ungünstigen Bedingungen, wie hohen Außentemperaturen, starke Sonneneinstrahlung, sichergestellt ist. Eine derartige Lösung bringt Vorteile ohne zusätzlichen Bedarf von Bauraum und Gewicht des Kältemittelkreislaufs.

Die beschriebene Lüftersteuerung arbeitet immer bedarfsgerecht, d.h. energetisch optimal; durch die fahrgeschwindigkeitsabhängige Lüftersteuerung werden unnötig hohe Lüfterdrehzahlen vermieden.

Ausführungsbeispiele der Erfindung werden anhand einer Zeichnung näher erläutert. Darin zeigen:
- Fig. 1: schematisch eine Vorrichtung zur Regelung eines R134a-Kältemittelkreislaufs mit einer modifizierten Lüftersteuerung für einen Kondensator zur Steigerung der Kälteleistung, insbesondere im Idle-Betrieb;
- Fig. 2: schematisch eine alternative Ausführungsform für eine Vorrichtung zur Regelung eines R744-Kältemittelkreislaufs mit einer modifizierten Lüftersteuerung für einen Gaskühler zur Steigerung der Kälteleistung, insbesondere im Idle-Betrieb;
- Fig. 3: ein Diagramm für die Aufteilung der Stellgröße zur Regelung der Verdampfertemperatur in Stellgrößenbereiche zur Ansteuerung eines Kompressors und eines Lüfters, und
- Fig. 4: ein Diagramm für eine Störgrößenaufschaltung des momentanen Werts der Fahrgeschwindigkeit auf die Lüftersteuerung.

Einander entsprechende Teile sind in allen Figuren mit den gleichen Bezugszeichen versehen.

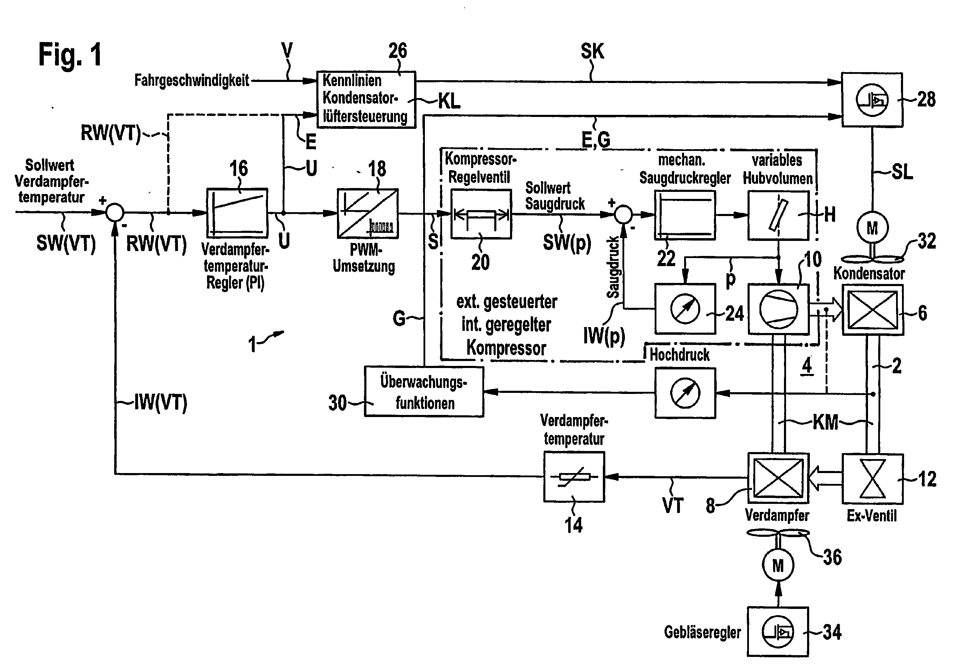

In Figur 1 ist eine Vorrichtung 1 zur Regelung der Verdampfertemperatur mit Hilfe eines R134a-Kältemittelkreislaufs 2 eines Klimatisierungssystems 4 (auch Klimaanlage genannt) für ein Fahrzeug dargestellt.

Der Kältemittelkreislauf 2 stellt ein geschlossenes System dar, in welchem ein Kältemittel KM R134a von einem Kompressor 10 zum Kondensator 6 und über ein Expansionsventil 12 zum Verdampfer 8 im Kreislauf geführt wird. Dabei nimmt das Kältemittel KM Wärme von einer in das Fahrzeug hinein strömenden Luft auf und gibt diese an die Umgebungsluft wieder ab. Hierzu ist es erforderlich, dass das Kältemittel KM einen hinreichend großen Temperaturunterschied zur Luft hat. Dazu erfolgt die Abkühlung des Kältemittels KM durch Druckverlust an dem im Kältemittelkreislauf 2 angeordneten Expansionsventil 12; die Abkühlung der in den Fahrzeuginnenraum hinein strömenden Luft erfolgt durch Wärmeaufnahme des Kältemittels KM im Verdampfer 8.

Im Detail umfasst der Kältemittelkreislauf 2 den beispielsweise vom Motor des Fahrzeugs angetriebenen Kompressor 10 oder Verdichter mit einem variablen Hubvolumen H zur Verdichtung eines gasförmigen Kältemittels KM R134a. Der Kompressor 10 saugt das gasförmige Kältemittel KM vom Verdampfer 8 über das Expansionsventil 12 kommend an. Das angesaugte gasförmige Kältemittel KM hat eine niedrige Temperatur und einen niedrigen Druck. Das Kältemittel KM wird durch den Kompressor 10 komprimiert und ändert seinen Aggregatzustand von gasförmig nach flüssig unter gleichzeitiger Erhitzung. Das gasförmige und heiße Kältemittel KM wird zum Kondensator 6 geführt. Durch die in den Kondensator 6 hineinströmende Luft wird das Kältemittel KM soweit abgekühlt, das es sich verflüssigt.

Das im Kondensator 6 abgekühlte Kältemittel KM wird zur anschließenden saugdruckseitigen Speisung des Kompressors 10 über das Expansionsventil 12 geführt, welches als Drossel arbeitet. Es kommt hierbei zu einer Entspannung des Kältemittels KM, so dass sich das Kältemittel KM stark abkühlt. Mittels des Expansionsventils 12 wird das abgekühlte Kältemittel KM in den Verdampfer 8 gespritzt, wo das Kältemittel KM der eintretenden Luft, z. B. Frischluft, die erforderliche Verdampfungswärme entzieht. Dadurch kühlt die Luft ab. Die abgekühlte Luft wird über ein nicht näher dargestelltes Gebläse und über Luftführungen in den Fahrzeuginnenraum geführt. Das Kältemittel KM wird nach dem Verdampfer 8 saugdruckseitig dem Kompressor 10 wieder zugeführt.

Zur Regelung des Kältemittelkreislaufs 2 umfasst die Vorrichtung 1 eine erweiterte Verdampfertemperatur-Regelung, die nachfolgend näher beschrieben wird.

Durch eine hier nicht dargestellte, übergeordnete Regelung wird ein Sollwert SW(VT) für eine Verdampfertemperatur VT vorgegeben, z. B. gleitend von 2 °C bis 10 °C. Mittels eines Temperatursensors 14 wird der Istwert IW(VT) für die Verdampfertemperatur VT am Verdampfer 8 bestimmt. Anhand der Differenz aus dem Sollwert SW(VT) und dem Istwert IW(VT) für die Verdampfertemperatur VT wird eine Regelabweichung RW(VT) für die Verdampfertemperatur VT bestimmt. Die Regelabweichung RW(VT) wird einem Verdampfertemperatur-Regler 16, beispielsweise einem P-I-Regler, zugeführt, der daraus eine Stellgröße U bildet. Die Stellgröße U des Verdampfertemperatur-Reglers 16 wird mittels eines Pulsweitenmodulators 18 anhand einer Übertragungskennlinie in ein pulsweitenmoduliertes Stellsignal S umgesetzt. Anschließend wird das pulsweitenmodulierte Stellsignal S einem Regelventil 20 des Kompressors 10 zur Steuerung des Hubvolumens H zugeführt.

In Fig. 1 wird ein extern steuerbarer Kompressor 10 mit integrierter Saugdruckregelung verwendet. Dieser Kompressortyp besteht im wesentlichen aus einem Kompressor-Regelventil 20 und einer mechanischen Saugdruckregelung mittels des Saudruckreglers 22 und des Drucksensors 24 über das variable Hubvolumen.

Komponenten, die zum extern gesteuerten und intern geregelten Kompressor 10 gehören, sind mit Strich-Punkt-Linie zusammengefasst.

Für eine hinreichend gute Innenraumklimatisierung durch eine Steigerung der Kälteleistung im Kältemittelkreislauf 2 wird die Stellgröße U zur Regelung der Verdampfertemperatur VT zusätzlich einer Lüftersteuerung 26 zugeführt. Dabei wird die Lüftersteuerung 26 zum einen von der Stellgröße U des Verdampfertemperatur-Reglers 16 geführt. Zum anderen kann alternativ der Lüftersteuerung 26 die Regelabweichung RW(VT) zwischen Sollwert SW(VT) für die Verdampfertemperatur (VT) und Istwert IW(VT) für die Verdampfertemperatur VT zugeführt werden.

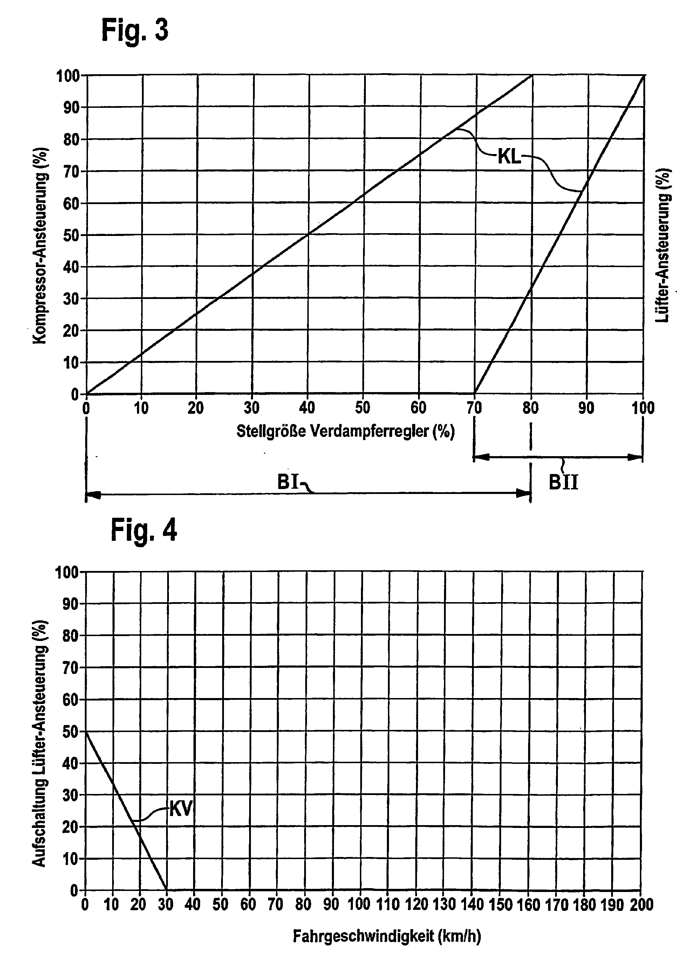

Einer derartigen, durch Stellgrößensteuerung modifizierten Lüftersteuerung 26 kann darüber hinaus zusätzlich als weitere Eingangsgröße E der momentane Wert der Fahrgeschwindigkeit v zugeführt werden. Dabei wird der momentane Wert der Fahrgeschwindigkeit v als Störgröße aufgeschaltet. Hierdurch werden bei der Lüftersteuerung 26 insbesondere jene Fahrzustände berücksichtigt, welche zu einer ungünstigen Innenraumklimatisierung führen. Die Lüftersteuerung 26 ist dabei als eine Kennlinien-Funktion KL ausgeführt, die anhand der Diagramme in den Figuren 3 und 4 näher beschrieben wird. Anhand der Kennlinie KL der Lüftersteuerung 26 wird dann ein Stellsignal SK für eine stufenlose oder eine gestufte Lüfter-Regelung 28 gebildet.

Zusätzlich wird der Lüfter-Regelung 28 als Eingangsgröße E ein Grenzwert G einer konventionellen Überwachungsfunktion 30, insbesondere eine Hochdruck-Überwachung, implementiert. Mittels der Lüfter-Regelung 28 wird eine Stellgröße SL zur Steuerung eines Lüfters 32 für den Kondensator 6 gebildet. Die am Verdampfer 8 abgekühlte Luft wird über das Klimagebläse 36 mit Gebläseregler 34 über Luftführungskanäle der Fahrzeugkabine zugeführt.

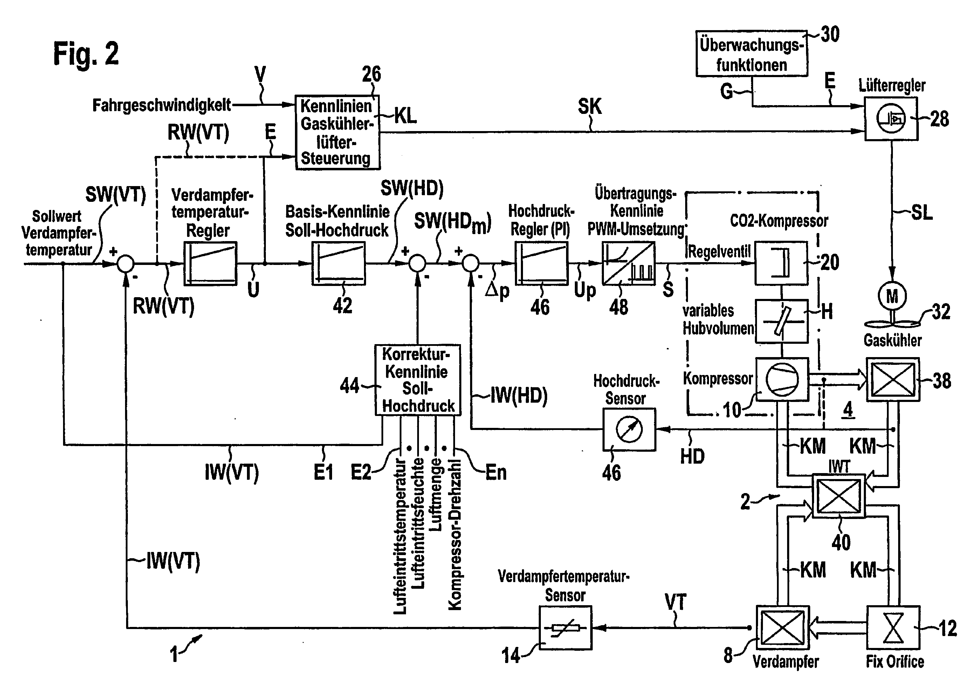

Figur 2 zeigt ein alternatives Klimatisierungssystem 4 mit dem Kältemittel R744, welches einen Gaskühler 38, einen Verdampfer 8 und einen dazwischengeschalteten inneren Wärmetauscher 40 umfasst, bei welchem ein der Klimatisierung oder Kühlung zugrunde liegender Kreisprozess zum Betrieb des Klimatisierungssystems 4 auch umgekehrt ausgeführt werden kann, so dass das Klimatisierungssystem 4 auch als Wärmepumpe fungiert. Der Wärmepumpenbetrieb ist nicht Gegenstand der Anmeldung. Nachfolgend wird das Klimatisierungssystem 4 für den Kältemittelkreislauf 2 gemäß Figur 2 näher beschrieben.

Der Kältemittelkreislauf 2 stellt ein geschlossenes System dar, in welchem ein Kältemittel KM Kohlendioxid = R744 vom Gaskühler 38 über den inneren Wärmetauscher 40 zum Verdampfer 8 im Kreislauf geführt wird. Dabei nimmt das Kältemittel KM Wärme von einer in das Fahrzeug hinein strömenden Luft auf und gibt diese an die Umgebungsluft wieder ab. Hierzu ist es erforderlich, dass das Kältemittel KM einen hinreichend großen Temperaturunterschied zur Luft hat. Dazu erfolgt die Abkühlung des Kältemittels KM durch Druckverlust an einem im Kältemittelkreislauf 2 angeordneten Expansionsorgan 12; die Abkühlung der in den Fahrzeuginnenraum hinein strömenden Luft erfolgt durch Wärmeaufnahme des Kältemittels KM im Verdampfer 8.

Im Detail umfasst der Kältemittelkreislauf 2 den Kompressor 10 mit einem variablen Hubvolumen H zur Verdichtung des gasförmigen Kältemittels KM. Der Kompressor 10 saugt das gasförmige Kältemittel KM an. Das angesaugte gasförmige Kältemittel KM hat eine niedrige Temperatur und einen niedrigen Druck. Das Kältemittel KM wird durch den Kompressor 10 komprimiert unter gleichzeitiger Erhitzung. Das gasförmige und heiße Kältemittel KM wird zum Gaskühler 38 geführt. Durch die in den Gaskühler 38 hineinströmende Luft wird das Kältemittel KM abgekühlt.

Das im Gaskühler 38 abgekühlte Kältemittel KM wird zur anschließenden saugdruckseitigen Speisung des Kompressors 10 über den inneren Wärmetauscher 40 und über das Expansionsventil 12 geführt, welches als Drossel arbeitet. Es kommt hierbei zu einer Entspannung des Kältemittels KM, so dass sich das Kältemittel KM stark abkühlt. Mittels des Expansionsorgans 12 wird das abgekühlte Kältemittel KM in den Verdampfer 8 gespritzt, wo das Kältemittel KM der eintretenden Luft, z. B. Frischluft, die erforderliche Verdampfungswärme entzieht. Dadurch kühlt die Luft ab. Die abgekühlte Luft wird über ein nicht näher dargestelltes Gebläse und über Luftführungen in den Fahrzeuginnenraum geführt. Das Kältemittel KM wird nach dem Verdampfer 8 über den inneren Wärmetauscher 40 saugdruckseitig dem Kompressor 10 wieder zugeführt.

Aus Stabilitätsgründen und zur Vermeidung von hohen Druckspitzen im Kältemittelkreislauf 2, z. B. beim Heißstart oder sprunghaften Drehzahlanstieg des Kompressors 10, umfasst die Vorrichtung 1 zur Regelung des Kältemittelkreislaufs 2 eine erweiterte Verdampfertemperatur-Regelung, die nachfolgend näher beschrieben wird. Die Verdampfertemperatur-Regelung umfasst eine modifizierte unterlagerte Kältemittel-Hochdruckregelung.

Durch eine hier nicht dargestellte, übergeordnete Regelung wird der Sollwert SW(VT) für die Verdampfertemperatur VT vorgegeben, z. B. gleitend von 2 °C bis 10 °C. Mittels eines Temperatursensors 16 wird der Istwert IW(VT) für die Verdampfertemperatur VT am Verdampfer 8 bestimmt. Anhand der Differenz aus dem Sollwert SW(VT) und dem Istwert IW(VT) für die Verdampfertemperatur VT wird ein Verdampfertemperatur-Regler 18, beispielsweise ein P-I-Regler, geführt. Aus der Stellgröße U des Verdampfertemperatur-Reglers 18 wird mittels einer Basis-Kennlinie 42 ein Sollwert SW(HD) für den Hochdruck HD des Kältemittels KM im Kältemittelkreislauf 2 nach dem Gaskühler 38 abgeleitet.

Aufgrund der Stoffeigenschaften des Kältemittels KM R744, ist gegebenenfalls eine zusätzliche Korrektur-Kennlinie 44 erforderlich, mit der der aus der Basiskennlinie 42 gewonnene Sollwert SW(HD) für den Hochdruck HD modifiziert wird, um einen korrigierten oder modifizierten Hochdruck-Sollwert SW(HDm) zu erhalten. Als Eingangsgrößen E1 bis En zur Korrektur des Sollwerts SW(HD) für den Hochdruck HD anhand der Korrektur-Kennlinie 44 dienen beispielsweise die Lufteintrittstemperatur, die Lufteintriffsfeuchte, die Luftmenge und/oder die Drehzahl des Kompressors 10.

Des Weiteren ist zur Ermittlung des Hochdruck-Istwerts IW(HD) ein Drucksensor 46 vorgesehen, der den Hochdruck HD im Kältemittelkreislauf 2 nach dem Gaskühler 38 bestimmt. Die Differenz aus dem Hochdruck-Sollwert SW(HD) oder SW(HDm) und dem Hochdruck-Istwert IW(HD) wird einem Hochdruck-Regler 46 als Druckdifferenzwert Δp zur Führung zugeführt. Anhand des Druckdifferenzwerts Δp wird mittels des Hochdruck-Reglers 46 eine Stellgröße Up zur Steuerung des Hubvolumens H des Kompressors 10 mittels eines Regelventils 20 bestimmt. Die Stellgröße Up wird mittels eines Pulsweitenmodulators 48 anhand einer Übertragungskennlinie in ein pulsweitenmoduliertes Stellsignal S für das Regelventil 20 umgesetzt. Anschließend wird das pulsweitenmodulierte Stellsignal S dem Regelventil 20 des Kompressors 10 zur Steuerung des Hubvolumens H zugeführt. Komponenten des CO₂-Kompressor 10 sind mit Strich-Punkt-Linie zusammengefasst.

Die modifizierte Lüftersteuerung 26 in dem Ausführungsbeispiel nach Figur 2 entspricht der Ausführungsform nach Figur 1.

In den Figuren 3 und 4 sind beispielhaft Kennlinien KL für die Lüftersteuerung 26 dargestellt. Die Zahlenwerte sind beispielhaft erfasst worden. Figur 3 zeigt die Aufteilung des Stellgrößenbereichs der Verdampfertemperatur-Regelung 16 in einen ersten Bereich BI für eine Ansteuerung des Kompressors 10 und in einen zweiten Bereich BII für eine Ansteuerung des Lüfters 32 für den Gaskühler 38 gemäß Figur 2 oder den Kondensator 6 gemäß Figur 1. Dabei dient die Stellgröße U zur Regelung der Verdampfertemperatur VT im ersten Bereich BI von 0 % bis 80 % der Kompressorsteuerung des Kompressors 10. Im zweiten Bereich BII von größer 70 % der Stellgröße U dient diese der Lüftersteuerung 26 zur Steuerung des Lüfters 32 für den Kondensator 6 oder den Gaskühler 38. Mit anderen Worten: Im unteren, ersten Stellgrößenbereich BI wird die Stellgröße U zur Regelung der Verdampfertemperatur VT für die Kompressorsteuerung des Kompressors 10 verwendet. Wird dabei die vorgegebene Verdampfertemperatur VT nicht erreicht, so steigt die Stellgröße U in den oberen zweiten Bereich BII an, der dann auf die Lüftersteuerung 26 einwirkt. Auf diese Art und Weise wird bei ungünstigen Randbedingungen zumindest der Abstand zur gewünschten Verdampfertemperatur VT verringert.

Figur 4 zeigt die Kennlinie KV für die Aufschaltung der Fahrgeschwindigkeit v als Störgröße auf die Kennlinie KL der Lüftersteuerung.

### Bezugszeichenliste

- 1: Vorrichtung zur Verdampfertemperatur-Regelung
- 2: Kältemittelkreislauf
- 4: Klimatisierungssystem
- 6: Kondensator
- 8: Verdampfer
- 10: Kompressor
- 12: Expansionsventil bzw. Expansionsorgan
- 14: Temperatursensor
- 16: Verdampfertemperatur-Regler
- 18: Pulsweitenmodulator
- 20: Regelventil
- 22: Saugdruck-Regler
- 24: Drucksensor
- 26: Lüftersteuerung
- 28: Lüfter-Regelung
- 30: Überwachungsfunktion
- 32: Lüfter
- 34: Gebläseregler
- 36: Gebläse
- 38: Gaskühler
- 40: innerer Wärmetauscher
- 42: Basis-Kennlinie
- 44: Korrektur-Kennlinie
- 46: Hochdruck-Regler
- 48: Pulsweitenmodulator

- E: Eingänge
- E1 bis En: Eingangsgrößen
- G: Grenzwert
- H: Hubvolumen des Kompressors
- HD: Hochdruck
- IW(HD): Hochdruck-Istwert
- IW(VT): Verdampfertemperatur-Istwert
- K: Kennlinie
- KL: Kennlinie für Lüftersteuerung
- KV: Kennlinie für Störgrößenaufschaltung
- KM: Kältemittel
- p: Saugdruck
- Δp: Differenzdruckwert
- RW(VT): Regelabweichung Verdampfertemperatur
- S: Stellsignal für Regelventil
- SL: Stellgröße für Lüfter
- SK: Stellsignal für Lüfter-Regelung
- SW(HD): Hochdruck-Sollwert
- SW(HDm): modifizierter Hochdruck-Sollwert
- SW(VT): Verdampfertemperatur-Sollwert
- U: Stellgröße für Verdampfertemperatur und Lüftersteuerung
- Up: Stellgröße für Hochdruck
- V: Fahrgeschwindigkeit
- VT: Verdampfertemperatur

## Patentansprüche

1. Verfahren zur Regelung eines Kältemittelkreislaufs (2) einer Klimaanlage (4) für ein Fahrzeug, bei dem in einem Basisregelkreis ein Sollwert (SW(VT)) für eine Verdampfertemperatur (VT) vorgegeben wird, anhand dessen mittels eines Verdampfertemperatur-Reglers (16) eine Stellgröße (U) zur Regelung der Verdampfertemperatur (VT) ermittelt wird, die zusätzlich einer Lüftersteuerung (26) zugeführt wird, **dadurch gekennzeichnet, dass** die Stellgröße (U) zur Regelung der Verdampfertemperatur (VT) in einem ersten Bereich (BI) von 0 % bis 80 % einer Kompressorsteuerung zugeführt wird und die Stellgröße (U) zur Regelung der Verdampfertemperatur (VT) in einem zweiten Bereich (BII) von größer 70 % der Lüftersteuerung (26) zugeführt wird.

2. Verfahren nach Anspruch 1, bei dem die Lüftersteuerung (26) von der Stellgröße (U) für die Verdampfertemperatur (VT) geführt wird.

3. Verfahren nach einem der Ansprüche 1 oder 2, bei dem der Lüftersteuerung (26) die Regelabweichung (RW(VT)) zwischen Sollwert (SW(VT)) für die Verdampfertemperatur (VT) und Istwert (IW(VT)) für die Verdampfertemperatur (VT) zugeführt wird.

4. Verfahren nach einem der Ansprüche 1 bis 3, bei dem der Lüftersteuerung (26) der momentane Wert der Fahrgeschwindigkeit (v) zugeführt wird.

5. Verfahren nach Anspruch 4, bei dem der momentane Wert der Fahrgeschwindigkeit (v) als Störgröße aufgeschaltet wird.

6. Verfahren nach einem der vorhergehenden Ansprüche 1 bis 5, bei dem mittels der Lüftersteuerung (26) anhand einer Kennlinie (KL) ein Stellsignal (SK) für eine stufenlose oder eine gestufte Lüfter-Regelung (28) gebildet wird.

7. Verfahren nach einem der Ansprüche 1 bis 6, bei dem eine Überwachungsfunktion (30), insbesondere eine Hochdruck-Überwachung, zur Steuerung eines Lüfters (32) implementiert wird.

8. Verfahren nach Anspruch 7, bei dem die Überwachungsfunktion (30) als eine Steuergröße der Lüfter-Regelung (28) zugeführt wird.

9. Vorrichtung (1) zur Regelung eines Kältemittelkreislauf (2) einer Klimaanlage für ein Fahrzeug mit einem Basisregelkreis zur Ermittlung eines Sollwerts (SW(VT)) für eine Verdampfertemperatur (VT) und einem nachgeschalteten Verdampfertemperatur-Regler (16), anhand dessen eine Stellgröße (U) zur Regelung der Verdampfertemperatur (VT) bestimmt wird, wobei dem Verdampfertemperatur-Regler (16) eine Lüftersteuerung (26) nachgeschaltet ist, die von der Stellgröße (U) des Verdampfertemperatur-Reglers (16) geführt wird, **dadurch gekennzeichnet, dass** die Lüftersteuerung (26) als eine Kennlinien-Funktion (KL) der Stellgröße (U) ausgebildet ist, wobei in einem ersten Bereich (B1) von 0 % bis 80 % der Stellgröße (U) diese auf eine Kompressorsteuerung des Kompressors (10) einwirkt und in einem zweiten Bereich (BII) von größer 70 % der Störgröße (U) diese auf die Lüftersteuerung (26) einwirkt.

10. Vorrichtung nach Anspruch 9, wobei die Lüftersteuerung (26) mit mehreren Eingängen (E) versehen ist.

11. Vorrichtung nach Anspruch 10, wobei einer der Eingänge (E) zur Steuerung des Lüfters (32) in Abhängigkeit von der Regelabweichung (RW(VT)) zwischen Sollwert (SW(VT)) für die Verdampfertemperatur (VT) und Istwert (IW(VT)) für die Verdampfertemperatur (VT) vorgesehen ist.

12. Vorrichtung nach Anspruch 10 oder 11, wobei einer der Eingänge (E) zur Steuerung des Lüfters (32) in Abhängigkeit vom momentanen Wert der Fahrgeschwindigkeit (v) vorgesehen ist.

13. Vorrichtung nach einem der Ansprüche 9 bis 12, wobei der Lüftersteuerung (26) eine Lüfter-Regelung (28) nachgeschaltet ist.

14. Vorrichtung nach Anspruch 13, wobei der Lüfter-Regelung (28) eine Überwachungsfunktion (30), insbesondere eine Hochdruck-Überwachung, aufgeschaltet ist.

15. Vorrichtung nach einem der Ansprüche 9 bis 14, wobei die Lüftersteuerung (26) als ein Software-Modul oder in analoger Schaltungstechnik ausgebildet ist.

## Claims

1. A method for regulating a coolant circuit (2) of an air conditioning system (4) for a vehicle, in which method a set point value (SM(VT)) for a vaporizer temperature (VT) is predefined in a basic regulating circuit and is used to determine, by means of a vaporizer temperature regulator (16), a manipulated variable (U) for regulating the vaporizer temperature (VT) which is additionally fed to a fan controller (26) wherein the manipulated variable (U) is fed to a compressor controller in order to regulate the vaporizer temperature (VT) in a first range (BI) from 0% to 80% and wherein the manipulated variable (U) is fed to the fan controller (26) in order to regulate the vaporizer temperature (VT) in a second range (BII) of greater than 70%.

2. The method as claimed in claim 1, in which the fan controller (26) is guided by the manipulated variable (U) for the vaporizer temperature (VT).

3. The method as claimed in one of claims 1 or 2, in which the control error (RW(VT)) between the set point value (SW(VT)) for the vaporizer temperature (VT) and the actual value (IW(VT)) for the vaporizer temperature (VT) is fed to the fan controller (26).

4. The method as claimed in one of claims 1 to 3, in which the instantaneous value of the velocity (v) is fed to the fan controller (26).

5. The method as claimed in claim 4, in which the instantaneous value of the velocity (v) is applied as an interference variable.

6. The method as claimed in one of claims 1 to 5, in which an actuation signal (SK) is formed for a stepless or a stepped fan regulating system (28) by means of the fan controller (26) using a characteristic curve (KL).

7. The method as claimed in one of claims 1 to 6, in which a monitoring function (30), in particular high pressure monitoring, is implemented in order to control a fan (32).

8. The method as claimed in claim 7, in which the monitoring function (30) is fed as a control variable to the fan regulating system (28).

9. A device (1) for regulating a coolant circuit (2) of an air conditioning system for a vehicle having a basic regulating circuit for determining a set point value (SW(VT)) for a vaporizer temperature (VT) and a vaporizer temperature regulator (16) which is connected downstream and by means of which a manipulated variable (U) for regulating the vaporizer temperature (VT) is determined, a fan controller (26) which is guided by the manipulated variable (U) of the vaporizer temperature regulator (16) being connected downstream of the vaporizer temperature regulator (16) wherein the fan controller (26) being embodied as a characteristic curve function (KL) of the manipulated variable (U), wherein in a first range (BI) from 0% to 80% of the manipulated variable (U) the latter acts on a compressor controller of the compressor (10), and in a second range (BII) of greater than 70% of the manipulated variable (U) the latter acts on the fan controller (26).

10. The device as claimed in claim 9, wherein the fan controller (26) is provided with a plurality of inputs (E) .

11. The device as claimed in claim 10, wherein one of the inputs (E) for controlling the fan (32) is provided as a function of the control error (RW(VT)) between the set point value (SW(VT)) for the vaporizer temperature (VT) and the actual value (IW(VT)) for the vaporizer temperature (VT).

12. The device as claimed in claim 10 or 11, wherein one of the inputs (E) for controlling the fan (32) is provided as a function of the instantaneous value of the velocity (v).

13. The device as claimed in one of claims 9 to 12, wherein a fan regulating system (28) is connected downstream of the fan controller (26).

14. The device as claimed in claim 13, wherein a monitoring function (30), in particular high pressure monitoring, is applied to the fan regulating system (28).

15. The device as claimed in one of claims 9 to 14, wherein the fan controller (26) is embodied as a software module or using analog circuit technology.

## Revendications

1. Procédé servant à la régulation d'un circuit (2) de fluide frigorigène d'un système de climatisation (4) pour un véhicule, procédé dans lequel est prédéfinie, dans un circuit de régulation de base, une valeur théorique (SW(VT)) pour une température d'évaporateur (VT), valeur théorique à l'aide de laquelle on détermine, au moyen d'un régulateur (16) de la température de l'évaporateur, une variable de réglage (U) servant à la régulation de la température (VT) de l'évaporateur, variable de réglage qui est fournie en outre à une commande de ventilateur (26),
**caractérisé en ce que** la variable de réglage (U) servant à la régulation de la température (VT) de l'évaporateur est fournie dans une première plage (BI) allant de 0 % à 80 % d'une commande de compresseur, et la variable de réglage (U) servant à la régulation de la température (VT) de l'évaporateur est fournie dans une deuxième plage (BII) de plus de 70 % de la commande (26) du ventilateur.

2. Procédé selon la revendication 1, dans lequel la commande (26) du ventilateur est guidée par la variable de réglage (U) prévue pour la température (VT) de l'évaporateur.

3. Procédé selon l'une des revendications 1 ou 2, dans lequel l'écart de régulation (RW(VT)) entre la valeur théorique (SW(VT)) pour la température (VT) de l'évaporateur, et la valeur réelle (TW(VT)) pour la température (VT) de l'évaporateur, est fourni à la commande (26) du ventilateur.

4. Procédé selon l'une quelconque des revendications 1 à 3, dans lequel la valeur de la vitesse de roulage (v), au moment considéré, est fournie à la commande (26) du ventilateur.

5. Procédé selon la revendication 4, dans lequel la valeur de la vitesse de roulage (v), au moment considéré, est affectée comme variable perturbatrice.

6. Procédé selon l'une quelconque des revendications 1 à 5, dans lequel un signal de réglage (SK) prévu pour une régulation (28) continue ou graduelle du ventilateur est formé au moyen de la commande (26) du ventilateur, à l'aide d'une courbe caractéristique (KL).

7. Procédé selon l'une quelconque des revendications 1 à 6, dans lequel une fonction de contrôle (30), en particulier un contrôle de haute pression, est mise en oeuvre pour la commande d'un ventilateur (32).

8. Procédé selon la revendication 7, dans lequel la fonction de contrôle (30) est fournie à la régulation (28) du ventilateur, comme une variable de commande.

9. Dispositif (1) servant à la régulation d'un circuit (2) de fluide frigorigène d'un système de climatisation pour un véhicule, comprenant un circuit de régulation de base servant à déterminer une valeur théorique (SW(VT)) pour une température d'évaporateur (VT), et un régulateur (16) de la température de l'évaporateur, monté en aval, régulateur à l'aide duquel on détermine une variable de réglage (U) servant à la régulation de la température (VT) de l'évaporateur, où une commande de ventilateur (26) est montée en aval du régulateur (16) de la température de l'évaporateur, commande de ventilateur qui est guidée par la variable de réglage (U) du régulateur (16) de la température de l'évaporateur,
**caractérisé en ce que** la commande (26) du ventilateur est configurée comme une fonction de courbe caractéristique (KL) de la variable de réglage (U) où, dans une première plage (BI) allant de 0 % à 80 % de la variable de réglage (U), celle-ci agit sur une commande du compresseur (10) et, dans une deuxième plage (BII) de plus de 70 % de la variable de réglage (U), celle-ci agit sur la commande (26) du ventilateur.

10. Dispositif selon la revendication 9, où la commande (26) du ventilateur est dotée de plusieurs entrées (E).

11. Dispositif selon la revendication 10, où l'une des entrées (E) est prévue pour la commande du ventilateur (32), en fonction de l'écart de régulation (RW(VT)) entre la valeur théorique (SW(VT)) pour la température (VT) de l'évaporateur, et la valeur réelle (IW(VT)) pour la température (VT) de l'évaporateur.

12. Dispositif selon la revendication 10 ou 11, où l'une des entrées (E) est prévue pour la commande du ventilateur (32), en fonction de la valeur de la vitesse de roulage (v), au moment considéré.

13. Dispositif selon l'une quelconque des revendications 9 à 12, où une régulation (28) du ventilateur est montée en aval de la commande (26) du ventilateur.

14. Dispositif selon la revendication 13, où une fonction de contrôle (30), en particulier un contrôle de haute pression, est affectée à la régulation (28) du ventilateur.

15. Dispositif selon l'une quelconque des revendications 9 à 14, où la commande (26) du ventilateur est conçue comme un module de logiciel ou dans une technique de circuits de type analogique.
